# EUROPÄISCHE PATENTSCHRIFT

(11) **EP 2 558 192 B1**
(45) Veröffentlichungstag und Bekanntmachung des Hinweises auf die Patenterteilung: **07.04.2021**
(21) Anmeldenummer: 11704969.2
(22) Anmeldetag: 17.02.2011
(51) Int. Cl.: B01J 19/26, B01J 4/00, C02F 1/76, B01F 3/04, B01F 3/08, B01F 5/04, C01B 11/02

(54) **TAUCHREAKTOR FÜR DIE ZUGABE VON CHLORGAS ODER CHLORDIOXID IN WASSER**
IMMERSION REACTOR FOR ADDING GASEOUS CHLORINE OR CHLORINE DIOXIDE IN WATER
RÉACTEUR IMMERGÉ POUR L'AJOUT DE CHLORE GAZEUX OU DE DIOXYDE DE CHLORE DANS L'EAU

(30) Priorität: 16.04.2010 DE 102010027840
(43) Veröffentlichungstag der Anmeldung: 20.02.2013
(73) Patentinhaber: Evonik Operations GmbH, 45128 Essen (DE)
(72) Erfinder: DUVE, Johannes, 48249 Dülmen (DE)
(74) Vertreter: Evonik Patent Association
(86) Internationale Anmeldenummer: PCT/EP2011/052334
(87) Internationale Veröffentlichungsnummer: WO 2011/128137

(56) Entgegenhaltungen:
- EP-A1- 0 024 851
- WO-A1-02/14216
- WO-A1-03/000586
- DE-A1-102008 042 424
- DE-A1-102008 049 734
- JP-A- 2008 094 662
- US-A1- 2005 244 328
- US-A1- 2008 219 087
- Dripping Wet Water ET AL: "Using catalytic chlorine dioxide to eradicate Legionella in a cooling tower", Technical brochure, 1. Januar 2009 (2009-01-01), Seiten 1-2, XP55009057, Texas (USA) Gefunden im Internet: URL:http://www.clo2ix.com/hq_pdfs/CLO2IX Case Study - Eradicate Legionella in a Cooling Tower.pdf [gefunden am 2011-10-10]

## Beschreibung

Die Erfindung betrifft eine Vorrichtung für die Zugabe von Chlordioxid in Wasser und für die Zugabe von Chlorgas in Wasser . Ferner wird auch ein Wasserbad, in welches eine erfindungsgemäße Vorrichtung eingetaucht ist, beansprucht.

Bekannt ist eine derartige Vorrichtung aus der Zusammenschau von WO2004078648A1 und WO2003000586A1.

Chlordioxid [ClO₂] ist eine hochgiftige, explosive Chemikalie, welche als Biozid bei der Desinfektion von Wasser verwendet wird. Bei letzterem kann es sich um Trinkwasser, Schwimmbad-Wasser oder Industriewasser, insbesondere Kühlwasser handeln.

Aufgrund seiner Gefährlichkeit und geringen Stabilität wird Chlordioxid ungern transportiert oder gelagert, stattdessen lieber direkt am Verwendungsort, insbesondere in dem zu behandelnden Wasser synthetisiert.

Es sind unterschiedliche Synthesewege für Chlordioxid bekannt. Im industriellen Maßstab wird Chlordioxid oft aus Natriumchlorit oder Natriumchlorat unter Verwendung von Salzsäure, Chlor oder von Schwefelsäure/Wasserstoffperoxid dargestellt.

Beim Chlorit/Säure-Verfahren wird Salzsäure [HCl] mit Natriumchlorit [NaClO₂] zu Chlordioxid, Wasser [H₂O] und Kochsalz [NaCl] umgesetzt:

5 NaClO₂ + 4 HCl -> 4 ClO₂ + 5 NaCl + 2 H₂O

Beim Chlorit/Chlor-Verfahren lautet die Reaktionsstöchiometrie:

2 NaClO₂ + Cl₂ -> 2 ClO₂ + 2 NaCl

Beim Chlorat-Verfahren wird Schwefelsäure [H₂SO₄] mit Wasserstoffperoxid [H₂O₂] und Natriumchlorat [NaClO₃] zu Chlordioxid, Natriumsulfat [Na₂SO₄], Sauerstoff [O₂] und Wasser umgesetzt:

2 NaClO₃ + H₂O₂ + H₂SO₄ -> 2 ClO₂ + Na₂SO₄ + O₂ + 2 H₂O

Aus DE202004005755U1 ist eine Vorrichtung zur Zugabe von Chlordioxid in Wasser bekannt, bei welcher zwei das Chlordioxid bildende Reaktionskomponenten in ein in einer Wasserleitung installiertes Mischrohr eingeleitet werden. Über die Wasserleitung wird das zu behandelnde Wasser zu- und abgeführt. Das beidseitig geöffnete Mischrohr erstreckt sich koaxial innerhalb der Wasserleitung. Nachteilig bei dieser Vorrichtung ist, dass das Mischrohr als Strömungswiderstand in der Wasserleitung Turbulenzen verursacht, welche sich in das Mischrohr fortsetzen und die Reaktion beeinträchtigen.

Aus der unmittelbar auf die WO2003000586A1 verweisende WO2004078648A1 ist eine gattungsbildende Vorrichtung bekannt, bei welcher sich das Mischrohr außerhalb der Wasserleitung befindet. In der Wasserleitung ist vielmehr eine Saugkammer angeordnet, in welche das zu behandelnde Zuwasser mittels einer sich verjüngenden Düse eingedüst wird. Der Querschnitt der Saugkammer ist im Vergleich zur Düse und zur sich aus der Saugkammer fortsetzenden Abwasserleitung deutlich größer, sodass in der Saugkammer ein Unterdruck entsteht. In die Saugkammer mündet das Mischrohr, welches radial zur Abwasserleitung verläuft. Über zwei im Mischrohr mündende Zuleitungen wird jeweils eine Reaktionskomponente - wässrige Schwefelsäure einerseits und Natriumchlorat in Wasserstoffperoxid andererseits - in das Mischrohr eingegeben. Der Unterdruck saugt die Komponenten durch das Mischrohr, in welchem sie sich vermischen und dem Chlorat-Verfahren entsprechend unter anderem zu Chlordioxid reagieren.
Sodann erfolgt in der Saugkammer eine Verdünnung des Reaktionsgemisches mit dem eingedüsten Wasser, sodass über die Abwasserleitung Wasser mit dem gewünschten Chlordioxidgehalt die Vorrichtung verlässt.

Zur Beherrschung des stark exothermen Schwefelsäureverfahrens ist die Zuleitung für die wässrige Schwefelsäure mit einer Kühleinrichtung versehen. Hierdurch wird der Aufbau der Vorrichtung vergleichsweise kompliziert.

Aus der JP 2002-220207 A ist eine Vorrichtung zur Zugabe von Chlordioxid in Wasser bekannt, welche ein Hyperchlorit/Chlorit-basiertes Verfahren in zwei Stufen durchführt:

| | |
|---|---|
| Stufe 1: | NaClO + 2 HCl -> Cl₂ + NaCl + H₂O |
| Stufe 2: | 2 NaClO₂ + Cl₂ -> 2 ClO₂ + 2 NaCl |

Hierzu werden erst die zwei Reaktionskomponenten Natriumhyperchlorit [NaClO] und Salzsäure [HCl] vermischt und reagieren in einem ersten Abschnitt eines Mischrohrs. Am Ende des ersten Abschnitts ist eine Beitrittsöffnung angeordnet, durch welche Natriumchlorit [NaClO₂] als dritte Reaktionskomponente beitritt. Sodann findet innerhalb eines zweiten Abschnitts des Mischrohrs die zweite Reaktionsstufe statt, innerhalb derer letztendlich das Chlordioxid entsteht. Am Ende des zweiten Abschnitts des Mischrohrs ist eine Saugkammer angeordnet, in welcher das Chlordioxid mit dem anzureichernden Wasser vermischt und über eine Abwasserleitung ausgetragen wird.

Da innerhalb der ersten Reaktionsstufe hochgiftiges Chlorgas Cl₂ entsteht, ist bei dieser Vorrichtung stets sicherzustellen, dass dieses nicht durch die Beitrittsöffnung nach außen entweichen kann.

Aus EP 0 119 686 A1 ist eine Vorrichtung zur Anreicherung von Chlordixoid in Wasser bekannt, bei welcher die beiden Reaktionskompontenten ausschließlich mit Hilfe einer Wasserstrahlpumpe gefördert werden. Die Dosierung der Kompontenten wird über entsprechende Ventile bewerkstelligt. Nachteil dieser Lösung ist, dass diese Ventile vergleichsweise aufwendig geregelt werden müssen. Hierzu sind Volumenstrommesser in den Zuleitungen der Komponenten erforderlich.

Aus DE 10 2008 049 734 A1 ist schließlich ein Verfahren und eine Vorrichtung zur diskontinuierlichen Chlordioxid-Produktion bekannt, bei welcher die Vorrichtung unter Wasser angeordnet wird. Nachteil des Batch-Betriebs ist notwendige Steuerung von Reaktions- und Spülbetrieb.

Aus der EP 0024851 A1 sind verschiedene Ausgestaltungen einer Vorrichtung zum Herstellen von Chlordioxid bekannt, welche ein zentrales, als Reaktionskammer bezeichnetes Bauteil mit einem Kontaktbereich, wenigstens zwei Einlässen und einem Auslass aufweist. An jedem der Einlässe ist eine Zuleitung von einem jeweils anderen Reaktandenbehältnis angeschlossen. Die verschiedenen Reaktanden strömen durch die Einlässe in das zentrale Bauteil ein und kommen im Kontaktbereich in Kontakt miteinander. Der aus dem zentralen Bauteil kommende Stoffstrom strömt über den Auslass 14 in eine Eduktoreinheit, wo er in einem Mischraum mit Wasser vermischt wird.

Aus der DE 102008042424 A1 ist eine Anordnung zur Behandlung von Wasser mit Chlordioxid bekannt. Die Anordnung weist einen Reaktor auf, welcher im Wasserbad einer Kühlturmtasse oder in einer Wasserrohrleitung in zu behandelndem Wasser positioniert sein kann. An einem proximalen Ende des Reaktors münden Zuleitungen, welche von Reaktandentanks und einem Wasseranschluss kommen. In jeder der Zuleitungen ist eine Förderpumpe vorgesehen, mit welcher die Zuführmenge dosiert wird. Mit Hilfe der aus den Reaktandentanks zugeführten Reaktanten wird Chlordioxid hergestellt. Dieses wird mit Hilfe des von dem Wasseranschluss kommenden Wassers auf ein gewünschtes Maß verdünnt. Die verdünnte Chlordioxidlösung tritt durch einen Reaktorauslass in das zu behandelnde Wasser.

Aus der JP 2008-94662 A ist ein Apparat zum Herstellen von chlordioxidhaltigem Wasser bekannt. Der Apparat weist einen Körperzylinder, einen radial mittig in dem Körperzylinder angeordneten inneren Zylinder und einen radial mittig in dem inneren Zylinder angeordneten Reaktor auf. Der Körperzylinder wird von Wasser durchströmt. Ein Teil des Wassers tritt in den zwischen Reaktor und innerem Zylinder bestehenden Wasserkanal ein und umströmt den Reaktor. Über Zuleitungen werden mittels Pumpen aus außerhalb des Körperzylinders angeordneten Tanks Reaktanten in das Innere des Reaktors gefördert. Dort entstehen gasförmiges Chlordioxid und eine Chlordioxidlösung. Der Reaktor weist in seinem distalen Bereich eine Gastrennkammer auf, in welcher das gasförmige Chlordioxid und die Chlordioxidlösung voneinander getrennt werden. Das gasförmige Chlordioxid tritt durch einen oben vorgesehen Auslass aus und wird von dem dort vorbeiströmenden Wasser aufgenommen. Die Chlordioxidlösung tritt durch einen unten angeordneten Auslass aus und vermischt sich mit dem dort vorbeiströmenden Wasser. Das den Apparat verlassende chlordioxidhaltige Wasser wird in einen Pool eingeleitet und vermischt sich dort mit dem darin enthaltenen Wasser.

Die US 2005/0244328 A1 offenbart mehrere Ausführungsformen von Anordnungen zum Herstellen von Chlordioxid, bei welchen ein Reaktor von mit Chlordioxid anzureicherndem Wasser umströmt wird. Dabei ist der Reaktor radial mittig in einem Rohrabschnitt angeordnet und mehrere Zuleitungen führen Reaktanten von außerhalb des Rohrabschnittes in die Reaktionskammer des Reaktors zu. In der Reaktionskammer gebildetes Chlordioxid verlässt die Reaktionskammer durch eine Auslassleitung und eine Ablassblende und vermischt sich danach mit dem Wasser, welches den Reaktor umströmt hat.

Aus der WO 02/14216 A1 ist ein Chlordioxidgenerator bekannt, welcher einen Eduktorblock und einen Reaktionszonenblock aufweist. Der Reaktionszonenblock hat drei Zuleitungen, welche in einen unteren Übergangsabschnitt einer Reaktionsbohrung münden. Der Querschnitt der unteren Übergangszone vergrößert sich ausgehend von einem Minimumfließquerschnittseinlass hin zu einem Maximumfließquerschnittsauslass. Im Bereich des Maximumfließquerschnittsauslasses ist die Reaktion abgeschlossen und der Stoffstrom fließt durch den Bereich konstanten Querschnitts der Reaktionsbohrung in eine Passage gleicher Querschnittsgröße des Eduktorblockes.

Die WO 03/000586 A1 offenbart eine Anordnung zum Erzeugen von Chlordioxid mit einem Reaktor und einem Eduktor. Der Reaktor und der Eduktor sind über eine Leitung miteinander verbunden. In den Reaktor führen stromaufseitig zwei Zuleitungen, durch welche Reaktanten mittels Förderpumpen in den Reaktor gefördert werden. Stromabseitig hat der Reaktor einen Auslass, durch welchen der Stoffstrom aus dem Reaktor austritt. Der Eduktor hat eine Saugkammer, in welche über eine Düse mit Chlordioxid anzureicherndes Wasser in die Saugkammer eingedüst wird. In der Saugkammer wird das aus der Leitung angesaugte Chlordioxid mit dem Wasser vermischt. Das mit Chlordioxid angereichte Wasser verlässt die Saugkammer über einen Venturiabschnitt.

Der Artikel "Using Catalytic Chlorine Dioxide to Eradicate Legionella in a Cooling Tower" von Dripping Wet Water ET AL betrifft eine mobile Anlage zum Erzeugen von Chlordioxid.

In Hinblick auf diesen Stand der Technik liegt der vorliegenden Erfindung die Aufgabe zu Grunde, eine Vorrichtung der eingangs genannten Gattung so weiterzubilden, dass sie einfach und robust aufgebaut ist und eine gefahrlose Durchführung verschiedener, auf zwei Reaktionskomponenten beruhenden Chlordioxidsynthesen gestattet.

Gelöst wird diese Aufgabe dadurch, dass das Mischrohr mit einer Beitrittsöffnung für den Beitritt von mit Chlordioxid anzureichendem, reaktionskomponentenfreiem Beiwasser versehen wird.

Gegenstand der Erfindung ist mithin eine Vorrichtung gemäß Anspruch 1 für die Zugabe von Chlordioxid in Wasser oder für die Zugabe von Chlorgas in Wasser. Diese Vorrichtung umfasst eine erste Zuleitung für die Zuleitung von Chlorgas oder von einer ersten Reaktionskomponente, und eine zweite Zuleitung für die Zuleitung von Wasser oder von einer zweiten Reaktionskomponente, mit einem ein Mischrohr zum Vermischen des Chlorgas mit Wasser oder zum Vermischen und Umsetzen beider Reaktionskomponenten zu Chlordioxid, an dessen einem Ende beide Zuleitungen münden und an dessen anderem Ende eine Saugkammer angeordnet ist, in welche mittels einer Düse mit Chlor oder Chlordioxid anzureichendes Zuwasser eindüsbar ist, und mit einer aus der Saugkammer stromabwärts führenden Abwasserleitung, bei welcher das Mischrohr in seiner Wandung zumindest eine Beitrittsöffnung für den Beitritt von mit Chlorgas oder Chlordioxid anzureichendem, reaktionskomponentenfreiem Beiwasser in das Mischrohr aufweist Der Schlankheitsgrad des Mischrohrs beträgt zwischen fünf und acht, wobei der Schlankheitsgrad das Verhältnis aus der Länge des Mischrohres zu seinem Innendurchmesser ist, wobei die Länge des Mischrohres von der am weitesten stromabwärts gelegenen Mündung bis zu der am nächsten stromaufwärts gelegenen Beitrittsöffnung gemessen wird.

Eine Grundidee der vorliegenden Erfindung besteht darin, innerhalb des schützenden Mischrohrs die Reaktion der Kompetenten zu Chlordioxid in vergleichsweise hohen Konzentrationen durchzuführen und nach Abschluss der Reaktion das entstandene Chlordioxid vor Eintritt in die Saugkammer schlagartig mit Beiwasser zu verdünnen, sodass ein Zerfall des in hoher Konzentration vorliegenden Chlordioxids unterbunden und dessen Konzentration bereits in der Mischkammer in einen ungefährlichen Bereich verschoben wird.

Es ist grundsätzlich möglich, die Beitrittsöffnung stromaufwärts der Mündungen anzuordnen. Dies könnte aber zu einer zu raschen Verdünnung führen, sodass die aus den Mündungen austretenden Reaktionskomponenten nicht mehr vollständig reagieren. Um dies zu vermeiden, ist die Beitrittsöffnung vorzugsweise stromabwärts von beiden Mündungen der Zuleitungen in das Mischrohr gelegen.

Wie bereits im Stand der Technik bewährt, sollten Düse und Abwasserleitung im Bereich der Saugkammer koaxial zueinander angeordnet sein.

Ebenfalls bewährt hat sich die Ausführung der Vorrichtung, bei der sich das Mischrohr zumindest im Bereich der Saugkammer radial zu Düse und Abwasserleitung erstreckt.

Diese Ausführung lässt sich besonders bevorzugt weiterbilden mit einer das der Saugkammer abgewandte Ende des Mischrohrs verschließenden, von beiden Zuleitungen durchsetzte Sockelplatte, und mit einem Spannsatz, welcher das Mischrohr zwischen Sockelplatte und Saugkammer mit einer Axialkraft beaufschlagt. Diese Gestaltung ist mechanisch besonders stabil, sodass die Vorrichtung auch einer Explosion der Komponenten im Mischrohr Stand halten kann.

Anstelle einer radialen Ausrichtung von Mischrohr zu Saugkammer kann sich das Mischrohr zumindest im Bereich der Saugkammer koaxial zu Düse und zu Abwasserleitung erstrecken.

Bevorzugt wird die Vorrichtung zur Umsetzung von Salzsäure und Natriumchlorit zu Chlordioxid in besonders hohen Dosen verwendet. Eine Verwendung der Eduktpaare Schwefelsäure/Natriumchlorit und Chlor/Natriumchlorid ist ebenfalls möglich. Entsprechende Verfahren sind in WO 2009/077309 A1 bzw. in WO 2009/077213 A1 offenbart.

Um die Reaktion begünstigende Strömungsverhältnisse im Mischrohr zu erzeugen, beträgt der Schlankheitsgrad des Mischrohrs 5 und 8 . Unter dem Schlankheitsgrad versteht sich in diesem Zusammenhang das Verhältnis aus der Länge des Mischrohrs zu seinem Innendurchmesser. Falls der Querschnitt des Rohrs nicht rund ist, ist als Innendurchmesser der Durchmesser eines Kreises heranzuziehen, dessen Fläche der Querschnittsfläche des Mischrohrs entspricht. Die Länge wird gemessen auf dem "aktiven Abschnitt" des Mischrohrs, innerhalb dessen die Reaktion abläuft; also von der am weitesten stromabwärts gelegenen Mündung der Zuleitung einer Reaktionskomponente bis zu der am nächsten Stromaufwärts gelegenen Beitrittsöffnung für das Beiwasser.

Der besondere Vorteil der erfindungsgemäßen Vorrichtung ist, dass sie als Tauchreaktor unmittelbar in dem Wasserbad angeordnet werden kann, dessen Wasser mit Chlordioxid anzureichern ist. Hierdurch wird die Sicherheit signifikant gesteigert und die Nutzung der für die Chlordioxid-Synthese vorteilhaft hohen Edukt-Konzentrationen ermöglicht. Gegebenenfalls auftretende Havarien werden durch das die Vorrichtung umgebende Wasser neutralisiert.

Ein weiterer Gegenstand der Erfindung ist mithin ein Wasserbad, in welches eine erfindungsgemäße Vorrichtung zumindest mit ihrem Mischrohr dergestalt eingetaucht ist, dass durch die Beitrittsöffnung Beiwasser aus dem Wasserbad in das Mischrohr beitritt. Bei dem Wasserbad handelt es sich bevorzugt um die Kühltasse eines Kühlturms.

Wenn sich die Vorrichtung im Wasserbad befindet, mündet die Abwasserleitung bevorzugt in dasselbe Wasserbad, damit der Anreicherungskreislauf geschlossen ist. Das anzureichernde Zuwasser kann ebenfalls aus dem Wasserbad stammen, wozu eine aus dem Wasserbad zur Düse führende Zuwasserleitung gelegt wird, gegebenenfalls unter Verwendung eines Druckerzeugers. Alternativ kann das Zuwasser einen anderen Ursprung als das Wasserbad haben.

Im Übrigen kann die Vorrichtung auch zur Anreicherung von Chlorgas [Cl₂] in Wasser verwendet werden. Hierzu wird durch die erste Zuleitung das Chlorgas in das Mischrohr eingeleitet.

Eine zweite Zuleitung ist für die Zuleitung von Wasser in das Mischrohr vorgesehen, um eine rasche Verdünnung innerhalb des Mischrohrs zu erreichen. Eine solche Vorrichtung entspricht dann baulich der zur Vermischung zweier Reaktionskomponenten mit dem Unterschied, dass durch die beiden Zuleitungen nicht die Reaktionskompontenten sondern einerseits das Chlorgas und andererseits das Wasser in das Mischrohr gelangen.

Die Erfindung soll nun anhand von Ausführungsbeispielen näher erläutert werden. Hierfür zeigen:
- Figur 1:: Vorrichtung im Querschnitt;
- Figur 2:: Vorrichtung in der in Vorderansicht;
- Figur 3:: Vorrichtung als Tauchreaktor in der Kühltasse eines Kühlturms;
- Tabelle 1:: Zusammenstellung von Maßen und Durchflussmengen dreier Baugrößen.

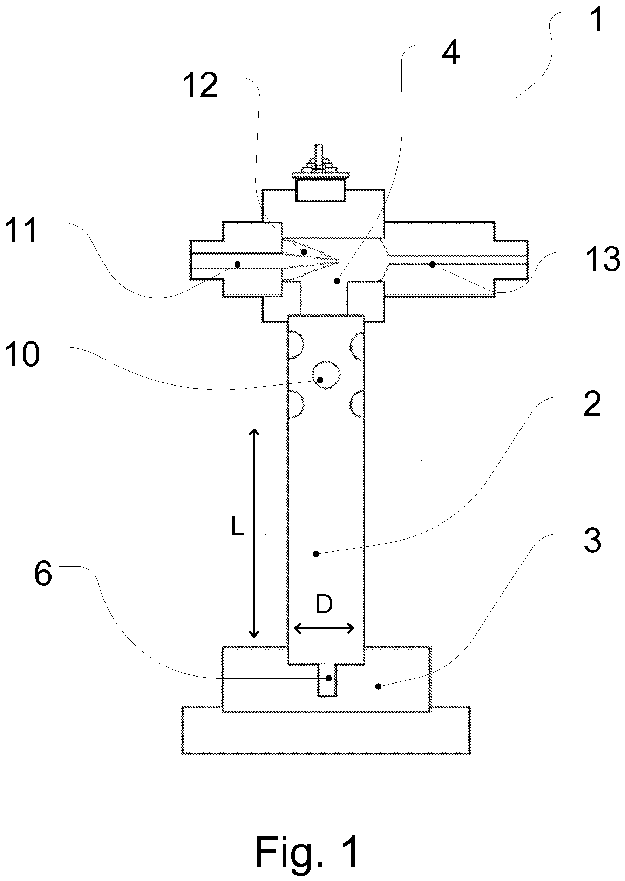

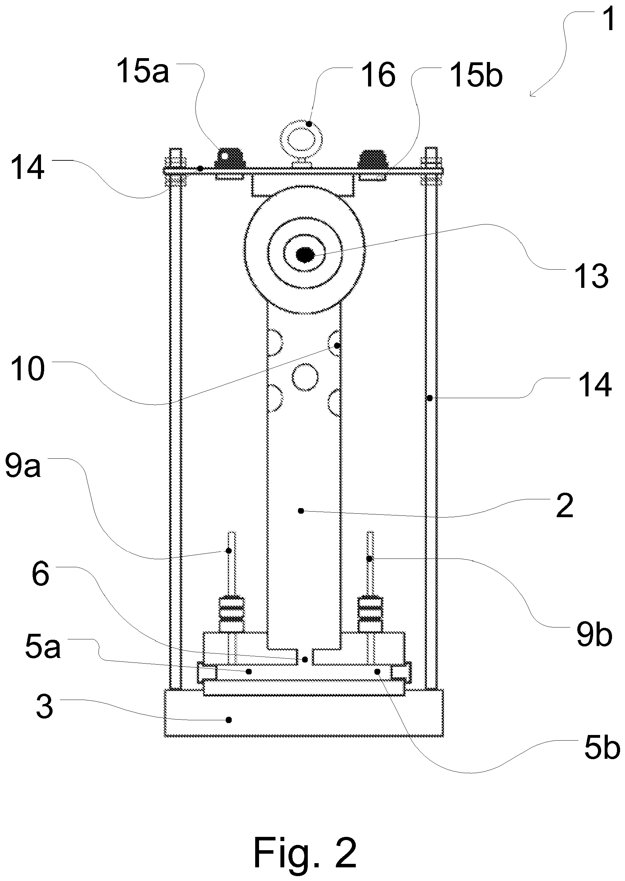

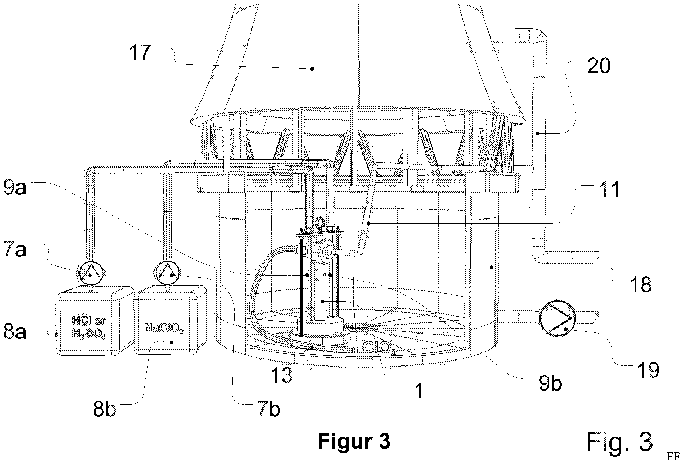

Eine erfindungsgemäße Vorrichtung 1 für die Zugabe Chlordioxid in Wasser zeigen die Figuren 1 und 2. Die Vorrichtung wird als Tauchreaktor komplett in einem Wasserbad versenkt, dessen Wasser mit Chlordioxid anzureichern ist; vgl. Figur 3.

Herzstück der Vorrichtung ist ein aus einem Titan-Werkstoff gefertigtes Mischrohr 2 mit kreisförmigem Querschnitt, welches sich von einer Sockelplatte 3 zu einer Saugkammer 4 erstreckt. Die Sockelplatte 3 verschließt das eine Ende des Mischrohrs 2. Durch die Sockelplatte 3 hindurch erstrecken sich - nur in Figur 2 erkennbar - zwei Zuleitungen 5a und 5b für die getrennte Zuleitung von zwei Reaktionskomponenten wie Salzsäure und Natriumchlorit in das Mischrohr 2. Beide Zuleitungen münden in einer gemeinsamen Mündung 6 in das Mischrohr. Selbstverständlich kann jede Zuleitung auch eine eigene Mündung im Mischrohr aufweisen. Um gegen die Reaktionskomponenten beständig zu sein, ist die Sockelplatte 3 zumindest im Bereich der Zuleitungen 5a, 5b und ihrer Mündung 6 aus PTFE gefertigt. Der nicht den Chemikalien ausgesetzte untere Teil der Sockelplatte besteht - wie alle übrigen Bauteile der Vorrichtung 1 - aus rostfreiem Stahl.

Die Reaktionskomponenten HCl (30 prozentig) und NaClO₂ (25 prozentig) gelangen mittels Pumpen 7a, 7b von ihren jeweiligen Tanks 8a, 8b über PTFE-Schläuche 9a, 9b in die Zuleitungen 5a, 5b und durch deren Mündung 6 in das Mischrohr 2. Im Mischrohr reagieren die Komponenten zu Chlordioxid, Kochsalz und Wasser. Das Reaktionsgemisch wird mit den Pumpen 7a und 7b durch das Mischrohr gefördert. Damit geben allein die Pumpen 7a, 7b das Mischverhältnis der Reaktionskomponenten vor.

Stromabwärts, unmittelbar vor der Saugkammer 4 sind in die Wandung des Mischrohrs 2 insgesamt sechs Beitrittsöffnungen 10 eingebracht. Durch die Beitrittsöffnungen 10 strömt Wasser, von dem Unterdruck der Saugkammer getrieben, aus der Umgebung der untergetauchten Vorrichtung als Beiwasser in das Mischrohr 2 ein und verdünnt das soeben entstandene Chlordioxid schlagartig. Das Mischrohr 2 ist so bemessen, dass die Reaktion der Komponenten vor Beitritt des Beiwassers abgeschlossen ist: Hierzu wurde dem Mischrohr 2 entlang des Reaktionsabschnittes von der Mündung 6 bis zu den Beitrittsöffnungen 10 ein Schlankheitsgrad von etwa 5,4 gegeben (Zeichnung nicht maßstabsgetreu).

Tabelle 1 führt die tatsächlichen Maße von drei möglichen Baugrößen der Vorrichtung beispielhaft auf. Jede der Baugrößen produziert eine Wasser / Chlordioxid -Lösung mit einem ClO₂-Gehalt von 2 Gramm pro Liter.

**Tabelle 1**

| Baugröße | [-] | I | II | III |
|---|---|---|---|---|
| Erzeugungsleistung Chlordioxid | [kg/h] | 1 | 10 | 20 |
| Abfluss angereichertes Abwasser aus Saugpumpe | [kg/h] | 500 | 5000 | 10000 |
| Chlordioxid-Konzentrion Abwasser aus Saugpumpe | [g/l] | 2 | 2 | 2 |
| Zufluss Zuwasser in Saugpumpe | [kg/h] | 250 | 1000 | 2000 |
| Zufluss Salzsäure [30 % ig] | [kg/h] | 6,4 | 64 | 128 |
| Zufluss Natriumchlorit [25 % ig] | [kg/h] | 6,7 | 67 | 134 |
| Innendurchmesser Mischrohr | [mm] | 14 | 34 | 45 |
| Länge "aktiver Abschnitt" Mischrohr | [mm] | 99 | 184 | 262 |
| Schlankheitsgrad | [-] | 7,1 | 5,4 | 5,8 |

Die Gestaltung der Saugkammer 4 ist weitestgehend Stand der Technik:
Mit Chlordioxid anzureichendes Zuwasser wird über eine Zuwasserleitung 11 in eine sich verjüngende Düse 12 eingeleitet, in der sich die Strömungsgeschwindigkeit des Zuwassers stark erhöht. Da der Querschnitt der Saugkammer 4 deutlich größer ist als der Austrittsquerschnitt der Düse 12, nimmt der Druck des eingedüsten Zuwassers in der Saugkammer stark ab, sodass ein Sog entsteht, welcher die Reaktionskomponenten und das Beiwasser aus dem Mischrohr 2 in die Saugkammer 4 saugt und dort verwirbelt, also weiter verdünnt. Die Mischung verlässt als Abwasser über eine Abwasserleitung 13 die Vorrichtung 1.

Zuwasserleitung 11 und Abwasserleitung 13 erstrecken sich zumindest im Bereich der Saugkammer radial zum Mischrohr 2. Dies hat den Vorteil, dass das Mischrohr mittels eines Spannsatzes 14 zwischen der Saugkammer 4 und der Sockelplatte 3 eingespannt werden kann. Über Spannsatz 14, Saugkammer 4, Mischrohr 2 und Sockelplatte 3 herrscht ein geschlossener Kraftfluss, welcher ein Zerbersten der Vorrichtung im Falle eine Explosion der Komponenten innerhalb der Vorrichtung verhindert. Auch sind Mischrohr, Sockelplatte und Saugkammer dank des Spannsatzes kraftschlüssig aneinander gefügt, sodass eine bei dieser Werkstoffkombination problematische stoffschlüssige Verbindung dieser Bauteile entfällt. Des Weiteren weist der Spannsatz 14 Zugentlastungen 15a, 15b für die Schläuche 9a und 9b, sowie eine Augenschraube 16 zum Versenken der Vorrichtung 1 in einem Wasserbad auf.

Besonders bevorzugt wird die erfindungsgemäße Vorrichtung nämlich als Tauchreaktor innerhalb eines Wasserbades betrieben, dessen Wasser mit Chlordioxid zu anzureichern ist. Hierzu wird die Vorrichtung zumindest soweit in dem Wasserbad eingetaucht, dass die Beitrittsöffnung(en) unterhalb des Wasserspiegels liegen. Bestenfalls wird die Vorrichtung vollständig in dem Wasserbad eingetaucht, sie kann mit ihrer Sockelplatte auf dem Grund ruhen.

In Figur 3 wird diese Anwendung am Beispiel eines Kraftwerk-Kühlturms erläutert. In dem Kühlturm 17 wird in an sich bekannter Weise das mit der Abwärme eines Kraftwerks oder eines anderen Prozesses beladene Kühlwasser gekühlt. Hierzu befindet sich unterhalb des Kühlturms 17 eine so genannte Kühltasse 18, in welcher sich eine große Menge des Kühlwassers befindet. Eine Kühlwasserpumpe 19 zieht kontinuierlich kaltes Kühlwasser aus der Kühltasse 18 ab und fördert es zu dem zu kühlenden, hier nicht dargestellten Prozess. Von dort kehrt das erwärmte Kühlwasser über eine Rückleitung 20 zum Kühlturm zurück und rieselt an dessen Innenseite in die Kühltasse 18 herab. Dabei wird das Kühlwasser von dem auf Grund des Kamineffekts durch den Kühlturm 17 aufsteigenden Luftzug gekühlt.

Um das biologische Wachstum im Kühlturm 17 zu verhindern, wird dem Kühlwasser das stark biozides Chlordioxid beigegeben.

Zu diesem Zwecke wird die Vorrichtung 1 als Tauchreaktor in die mit dem zu behandelnden Wasser gefüllte Kühltasse 18 komplett eingetaucht. Die Vorrichtung 1 ruht dann mit ihrer Sockelplatte 3 auf dem Grund der Kühltasse 18. Das Mischrohr 2 erstreckt sich vertikal durch das zu behandelnde Wasser. Die beiden Reaktionskomponenten werden aus jeweiligen Tanks 8a, 8b über Schläuche 9a, 9b von Dosier-Pumpen 7a, 7b getrieben in die Vorrichtung 1 gefördert. Das Zuwasser stammt aus dem Kühlkreislauf, es wird mittels der von der Rückleitung 20 abzeigenden Zuwasserleitung 11 in die Vorrichtung 1 geleitet. Der Förderdruck wird letztendlich von der Kühlwasserpumpe 19 aufgebaut. Das Zuwasser vermischt sich in der Saugkammer mit dem frisch dargestelltem Chlordioxid und mit dem durch die Beitrittsöffnungen 10 aus der Kühltasse 18 in die Vorrichtung 1 eingetretenen Beiwasser und wird über die Abwasserleitung 13 zurück in die Kühltasse 18 gegeben.

### Bezugszeichen

- 1: Vorrichtung
- 2: Mischrohr
- 3: Sockelplatte
- 4: Saugkammer
- 5a: Zuleitung eins
- 5b: Zuleitung zwei
- 6: Mündung
- 7a: Pumpe
- 7b: Pumpe
- 8a: Tank
- 8b: Tank
- 9a: Schlauch
- 9b: Schlauch
- 10: Beitrittsöffnung
- 11: Zuwasserleitung
- 12: Düse
- 13: Abwasserleitung
- 14: Spannsatz
- 15a: Zugentlastung
- 15b: Zugentlastung
- 16: Augenschraube
- 17: Kühlturm
- 18: Kühltasse
- 19: Kühlwasserpumpe
- 20: Rückleitung

## Patentansprüche

1. Vorrichtung für die Zugabe von
- (i) Chlorgas in Wasser oder
- (ii) Chlordioxid in Wasser,
mit einer ersten Zuleitung (5a) für die Zuleitung
- (i) von Chlorgas oder
- (ii) einer ersten Reaktionskomponente,
mit einer zweiten Zuleitung (5b) für die Zuleitung
(i) von Wasser oder
(ii) einer zweiten Reaktionskomponente
mit einem Mischrohr (2) zum
- (i) Vermischen des Chlorgases mit Wasser oder
- (ii) Vermischen und Umsetzen der ersten Reaktionskomponente mit einer zweiten Reaktionskomponente zu Chlordioxid,
wobei an dessen einem Ende beide Zuleitungen (5a, 5b) in einer gemeinsamen Mündung münden und an dessen anderen Ende eine Saugkammer (4) angeordnet ist, in welche mittels einer Düse (12) mit
- (i) Chlor oder
- (ii) Chlordioxid
anzureicherndes Zuwasser eindüsbar ist,
und mit einer aus der Saugkammer (4) stromabwärts führenden Abwasserleitung (13),
wobei das Mischrohr (2) in seiner Wandung zumindest eine Beitrittsöffnung (10) für den Beitritt von mit
- (i) Chlorgas oder
- (ii) Chlordioxid
anzureicherndem reaktionskomponentenfreiem Beiwasser in das Mischrohr (2) aufweist und der Schlankheitsgrad des Mischrohrs (2) zwischen fünf und acht beträgt, wobei der Schlankheitsgrad das Verhältnis aus der Länge des Mischrohres zu seinem Innendurchmesser ist, wobei die Länge des Mischrohres von der am weitesten stromabwärts gelegenen Mündung (6) bis zu der am nächsten stromaufwärts gelegenen Beitrittsöffnung (10) gemessen wird.

2. Vorrichtung nach Anspruch 1,
**dadurch gekennzeichnet,**
**dass** die Beitrittsöffnung (10) stromabwärts von beiden Mündungen (6) der Zuleitungen (5a, 5b) in das Mischrohr (2) gelegen ist.

3. Vorrichtung nach einem der Ansprüche 1 oder 2,
**dadurch gekennzeichnet,**
**dass** Düse (12) und Abwasserleitung (13) im Bereich der Saugkammer (4) koaxial zueinander angeordnet sind.

4. Vorrichtung nach Anspruch 3,
**dadurch gekennzeichnet,**
**dass** sich das Mischrohr (2) zumindest im Bereich der Saugkammer (4) radial zu Düse (12) und Abwasserleitung (13) erstreckt.

5. Vorrichtung nach Anspruch 4, **gekennzeichnet durch** eine das der Saugkammer (4) abgewandte Ende des Mischrohrs verschließende, von beiden Zuleitungen (5a, 5b) durchsetzte Sockelplatte (3), und durch einen Spannsatz (14), welcher das Mischrohr (2) zwischen Sockelplatte (3) und Saugkammer (4) mit einer Axialkraft beaufschlagt.

6. Vorrichtung nach Anspruch 3,
**dadurch gekennzeichnet,**
**dass** sich das Mischrohr (2) zumindest im Bereich der Saugkammer (4) koaxial zu Düse (12) und Abwasserleitung (13) erstreckt.

7. Wasserbad, insbesondere Kühltasse (18) eines Kühlturms (17),
**dadurch gekennzeichnet,**
**dass** in das Wasserbad eine Vorrichtung (1) nach einem der Ansprüche 1 bis 6 zumindest mit ihrem Mischrohr (2) dergestalt eingetaucht ist, dass durch die Beitrittsöffnung (10) Beiwasser aus dem Wasserbad in das Mischrohr (2) beitreten kann.

8. Wasserbad nach Anspruch 7,
**dadurch gekennzeichnet,**
**dass** die Abwasserleitung (13) in das Wasserbad mündet.

9. Wasserbad nach Anspruch 7 oder 8, **gekennzeichnet durch** eine aus dem Wasserbad zur Düse (12) führende Zuwasserleitung (11).

## Claims

1. Apparatus for introducing
- (i) chlorine gas into water or
- (ii) chlorine dioxide into water,
having a first feed conduit (5a) for the introduction
- (i) of chlorine gas or
- (ii) of a first reaction component,
having a second feed conduit (5b) for the introduction
(i) of water or
(ii) of a second reaction component having a mixing tube (2) for
- (i) mixing the chlorine gas with water or
- (ii) mixing and reacting the first reaction component with a second reaction component to form chlorine dioxide,
where both feed conduits (5a, 5b) open at their one end into a common mouth and a suction chamber (4) into which feed water to be enriched with
- (i) chlorine or
- (ii) chlorine dioxide
can be injected by means of a nozzle (12) is arranged at their other end,
and having a wastewater conduit (13) leading downstream from the suction chamber (4),
where the wall of the mixing tube (2) has at least one ancillary entry opening (10) for entry of ancillary water which is free of reaction components and is to be enriched with
- (i) chlorine gas or
- (ii) chlorine dioxide
into the mixing tube (2) and the aspect ratio of the mixing tube (2) is in the range from five to eight, where the aspect ratio is the ratio of the length of the mixing tube to its internal diameter, where the length of the mixing tube is measured from the mouth (6) which is furthest downstream to the ancillary entry opening (10) which is nearest upstream.

2. Apparatus according to Claim 1,
**characterized in that**
the ancillary entry opening (10) is located downstream of both mouths (6) of the feed conduits (5a, 5b) into the mixing tube (2).

3. Apparatus according to either of Claims 1 and 2,
**characterized in that**
the nozzle (12) and wastewater conduit (13) are arranged coaxially to one another in the region of the suction chamber (4).

4. Apparatus according to Claim 3,
**characterized in that**
the mixing tube (2) extends radially to the nozzle (12) and wastewater conduit (13) at least in the region of the suction chamber (4).

5. Apparatus according to Claim 4, **characterized by** a base plate (3) which closes the end of the mixing tube facing away from the suction chamber (4) and through which both the feed conduits (5a, 5b) pass, and by a clamping set (14) which exerts an axial force on the mixing tube (2) between the base plate (3) and suction chamber (4).

6. Apparatus according to Claim 3,
**characterized in that**
the mixing tube (2) extends coaxially with the nozzle (12) and wastewater conduit (13) at least in the region of the suction chamber (4).

7. Water bath, in particular cooling basin (18) of a cooling tower (17),
**characterized in that**
at least the mixing tube (2) of an apparatus (1) according to any of Claims 1 to 6 is immersed in the water bath in such a way that ancillary water can travel from the water bath though the entry opening (10) into the mixing tube (2).

8. Water bath according to Claim 7,
**characterized in that**
the wastewater conduit (13) opens into the water bath.

9. Water bath according to Claim 7 or 8, **characterized by** a feed water conduit (11) leading from the water bath to the nozzle (12).

## Revendications

1. Dispositif pour l'ajout
- (i) de chlore gazeux dans de l'eau ou
- (ii) de dioxyde de chlore dans de l'eau,
muni d'une première alimentation (5a) pour l'alimentation
- (i) de chlore gazeux ou
- (ii) d'un premier composant réactionnel,
muni d'une deuxième alimentation (5b) pour l'alimentation
(i) d'eau ou
(ii) d'un deuxième composant réactionnel,
muni d'un tube de mélange (2) pour
- (i) le mélange du chlore gazeux avec de l'eau ou
- (ii) le mélange et la mise en réaction du premier composant réactionnel avec un deuxième composant réactionnel pour former du dioxyde de chlore,
à une extrémité de celui-ci, les deux alimentations (5a, 5b) débouchant dans une embouchure commune et à l'autre extrémité de celui-ci, une chambre d'aspiration (4) étant agencée, dans laquelle, au moyen d'une buse (12), de l'eau amenée à enrichir en
- (i) chlore ou
- (ii) dioxyde de chlore
peut être injectée,
et muni d'une conduite d'eau évacuée (13) conduisant en aval à partir de la chambre d'aspiration (4),
le tube de mélange (2) comprenant dans sa paroi au moins une ouverture d'entrée (10) pour l'entrée d'eau entrante exempte de composants réactionnels, à enrichir en
- (i) chlore gazeux ou
- (ii) dioxyde de chlore,
dans le tube de mélange (2), et le degré de minceur du tube de mélange (2) étant compris entre cinq et huit, le degré de minceur étant le rapport de la longueur du tube de mélange à son diamètre intérieur, la longueur du tube de mélange étant mesurée à partir de l'embouchure (6) située la plus loin en aval jusqu'à l'ouverture d'entrée (10) située le plus près en amont.

2. Dispositif selon la revendication 1, **caractérisé en ce que** l'ouverture d'entrée (10) est située en aval des deux embouchures (6) des alimentations (5a, 5b) dans le tube de mélange (2).

3. Dispositif selon l'une quelconque des revendications 1 ou 2, **caractérisé en ce que** la buse (12) et la conduite d'eau évacuée (13) sont agencées coaxialement l'une de l'autre dans la zone de la chambre d'aspiration (4).

4. Dispositif selon la revendication 3, **caractérisé en ce que** le tube de mélange (2) s'étend radialement jusqu'à la buse (12) et la conduite d'eau évacuée (13) au moins dans la zone de la chambre d'aspiration (4).

5. Dispositif selon la revendication 4, **caractérisé par** une plaque formant socle (3) fermant l'extrémité du tube de mélange détournée de la chambre d'aspiration (4), traversée par les deux alimentations (5a, 5b), et par un jeu de serrage (14), qui sollicite le tube de mélange (2) entre la plaque formant socle (3) et la chambre d'aspiration (4) avec une force axiale.

6. Dispositif selon la revendication 3, **caractérisé en ce que** le tube de mélange (2) s'étend au moins dans la zone de la chambre d'aspiration (4) coaxialement à la buse (12) et à la conduite d'eau évacuée (13).

7. Bain d'eau, notamment bassin de refroidissement (18) d'une tour de refroidissement (17), **caractérisé en ce qu'**un dispositif (1) selon l'une quelconque des revendications 1 à 6 est plongé au moins avec son tube de mélange (2) dans le bain d'eau, de telle sorte que de l'eau entrante puisse entrer à partir du bain d'eau dans le tube de mélange (2) par l'ouverture d'entrée (10) .

8. Bain d'eau selon la revendication 7, **caractérisé en ce que** la conduite d'eau évacuée (13) débouche dans le bain d'eau.

9. Bain d'eau selon la revendication 7 ou 8, **caractérisé par** une conduite d'eau amenée (11) conduisant à partir du bain d'eau jusqu'à la buse (12).
